# EUROPEAN PATENT APPLICATION

(11) **EP 0 962 347 A1**
(43) Date of publication of application: **08.12.1999**
(21) Application number: 98961259.3
(22) Date of filing: 22.12.1998
(51) Int. Cl.: B60J 5/04

(54) **SIMPLIFIED DOOR FOR MOTOR VEHICLES**

(30) Priority: 23.12.1997 ES 9702678
(71) Applicant: Grupo Antolin Ingenieria, S.A., E-09007 Burgos (ES)
(72) Inventor: BARRERO SERRANO, Felipe, E-09007 Burgos (ES); MARCOS GONZALES, César, E-09002 Burgos (ES); GONZALEZ SAIZ, José Ignacio, E-09001 Burgos (ES); MARTINEZ MORAL, Francisco Javier, E-09004 Burgos (ES); MANSO MONEO, Alberto, E-09004 Burgos (ES); ROMERO MAGARINO, Antonio, E-09006 Burgos (ES); GIL PENA, José Maria, E-09006 Burgos (ES); MANZANAS RODRIGUEZ, Ricardo, E-34230 Torquemada (ES)
(74) Representative: Urteaga Simarro, José Antonio
(86) International application number: ES9800350
(87) International publication number: WO9933680

(57) **Abstract**

The invention relates to a door configuration wherein the internal skin of the door frame (8, 11, 18, 21, 22) presents a symmetry axis with respect to which are mounted most of the parts forming the two doors of the vehicle, either on one side or the other side of said axis. Thereby, a reduction of cost is achieved both in storage and in transport, as well as in other steps of the assembly cycle as fabrication and repair.

## Description

This invention relates to a simplified door for automobiles of the type which are based on an assembly formed by an external reinforcing panel, a frame and an internal panel of the door casing, connected to reinforcing and sealing units, that in general terms create one unit.

In known units of this type, the internal panel of the door casing traditionally receives the majority of the parts incorporated into the door on both sides of the vehicle, left and right, so that depending an the side in question, one panel is made for one side and another panel for the other side.

This method of proceeding has the disadvantage of a considerable cost in both storage and transport of the different components, as well as in other stages in the life of the assembly, such as during manufacture or in repair.

In the same way, the assembly of the components presents additional disadvantages, since it is necessary to fit each of them into its corresponding panel.

One object of this invention is to provide a simplified door for automobiles that avoids all these disadvantages.

Another object of this invention is to provide a simplified door for automobiles that allows the same parts to be used in both doors.

Another object of this invention is to provide a simplified door for automobiles that can be used in frameless doors, in which all the parts are applicable on both sides.

In order to put these objectives into practice, the door in accordance with the invention claims the existence of an external panel with its corresponding reinforcement and a lower seal, all on one side of the door frame, with an internal panel of the door frame with its hinge and lock side reinforcements, an external upper reinforcement of the door frame and an internal upper seal.

The internal panel of the door frame has the particular characteristic that it is a completely symmetrical part with regard to its horizontal X-X' axis, above and below it, and its longitudinal ends are suitably shaped so as to receive the hinges on one side and the lock on the other side, with these ends including some formally corresponding reinforcing parts.

One variant of the invention consists of simplifying the internal panel of the door so that a central unit is produced, contained in a single plane, which is symmetrical with regard to a horizontal X-X' axis, above and below the said axis, while the two support parts, both for the hinges and for the lock, are fitted to the two longitudinal ends of the said central unit, with the corresponding reinforcements being situated beside the latter.

Both support parts and both reinforcements have the same kind of symmetry as the central part, so that with this simplification, manufacturing is much easier.

In the same way, the invention claims a door provided with an external panel with its corresponding reinforcement, on one side of the frame and a door casing, with its end reinforcement for the hinges and lock and another upper reinforcement. The longitudinal ends of the door casing are provided with the corresponding shapes in order to receive the hinges and the lock, on which the said reinforcement are arranged.

The characteristic particularity lies in the fact that the door casing is a completely symmetrical part in relation to a central Y-Y' axis, so that the portions situated to the right and to the left of this axis are identical, and are also provided with components incorporated into them which are equal.

This characteristic logically extends to the end reinforcements and to the ends of the door casing themselves for the fitting of the hinges and lock.

In this kind of door formation, the upper part of the door casing is normally used to hold the upper weather seals for the window, while this arrangement admits the variant of introducing a holding or support bar into the structure of the door frame for the said upper weather seals.

Another variant of the invention establishes a noticeable simplification of the assembly, by making the door panel separately from its longitudinal ends that receive the hinges and lock, which are connected later by any means available.

On the accopmanying sheets of drawings, it is possible to appreciate the object of the invention in detail. In these drawings, which are not restrictive in nature, the following are represented:
- Figure 1 is a perspective of a door solution in accordance with the invention.
- Figure 2 is a perspective of the simplifies variant, in accordance with the invention.
- Figure 3 represents the elevation view of the items that configure the panel, supports, and reinforcements in Figure 2.
- Figure 4, is a perspective of the development of another door, in accordance with the invention.
- Figure 5 is another variant of the invention.
- Figure 6 is an enlarged representation of the internal wall of the casing shown in Figure 4.
- Figure 7 is a perspective in development of another variant of the invention.
- Figure 8 is also a perspective of the development of another variant covered by the invention.

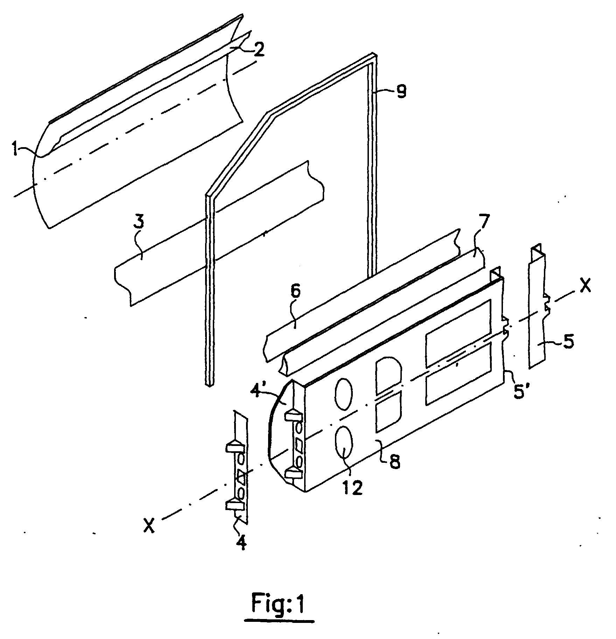

With regard to Figure 1, we can appreciate the door assembly made up of the external panel (1) with its reinforcement (2) and the internal reinforcement (3), all of which are on one side of the frame (9). On the internal side of the frame, we can observe the internal panel of the door casing (8) with an upper external reinforcement (6) and internal upper seal (7).

The longitudinal ends of this internal panel (8) are suitably shaped in order to receive the hinges at one end (4') and the lock at the other (5'), while also in turn being reinforced by the items (4,5).

This subassembly is perfectly symmetrical in relation to the horizontal X-X' axis, so that the two halves situated above and below this axis are established with the different items (12) in the same position and equally separated from this axis.

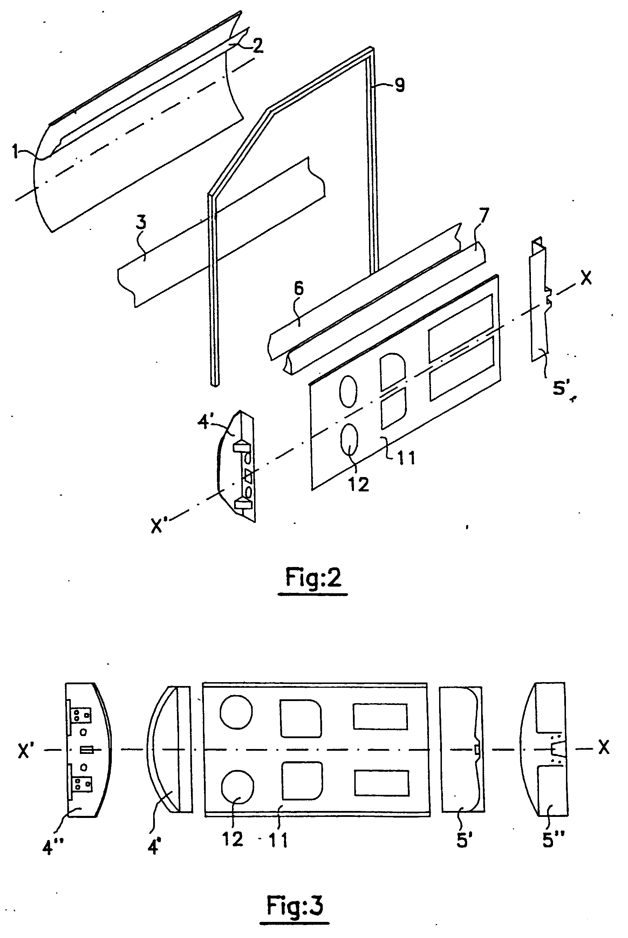

As regards Figure 2, in this variant we can observe the internal panel of the door casing (11) made in one single continent plane, with the support parts (4',5') for the hinges and locks, respectively, which in turn can later receive the reinforcement, not illustrated in this perspective.

Like in the case of Figure 1, this subassembly is symmetrical in relation to the horizontal X-X' axis, as are all the items (12) on board it, which are equally separated by the same distance above and below the said axis.

The different components can be joined together by welding, riveting, bolts, adhesives or any other uniting system available, in such a way that, as mentioned previously, the same parts can be used for both right hand and left hand doors.

The different items can be made of different materials and be of different thicknesses, thus achieving improvements as regards energy absorption (damping) in case of side impacts and a greater control of the rigidity of the structure.

Looking now at Figure 3, we can subassembly shown in Figure 2, with the flat central part (11), the two end supports (4',5') and their two reinforcements (4,5).

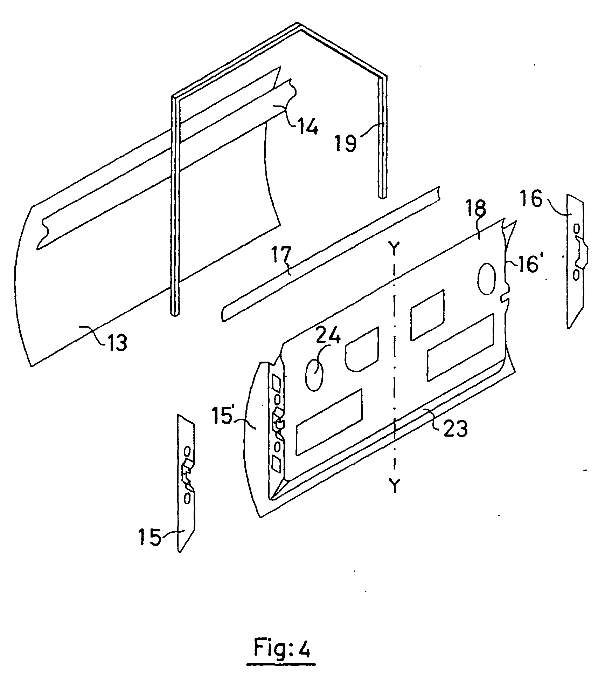

With regard to Figure 4, we can appreciate the external panel (13) with its corresponding reinforcement (14), both parts being on one side of the door frame (19).

On the internal side, we can observe the internal panel of the door casing (18) with its ends (15',16') suitably shaped in order to receive the hinges and lock, respectively, then later receiving the corresponding side reinforcements (15,16) on these ends and also the upper reinforcement of the casing (17).

It can be seen that the panel (18) of the casing is perfectly symmetrical in its geometry in relation to the vertical Y-Y' axis, with this symmetry extending to the side reinforcements (15,16), all of which is carried out in such a way that the halves on both sides of the said axis are, as can be appreciated, suitably symmetrical, as anticipated by the invention.

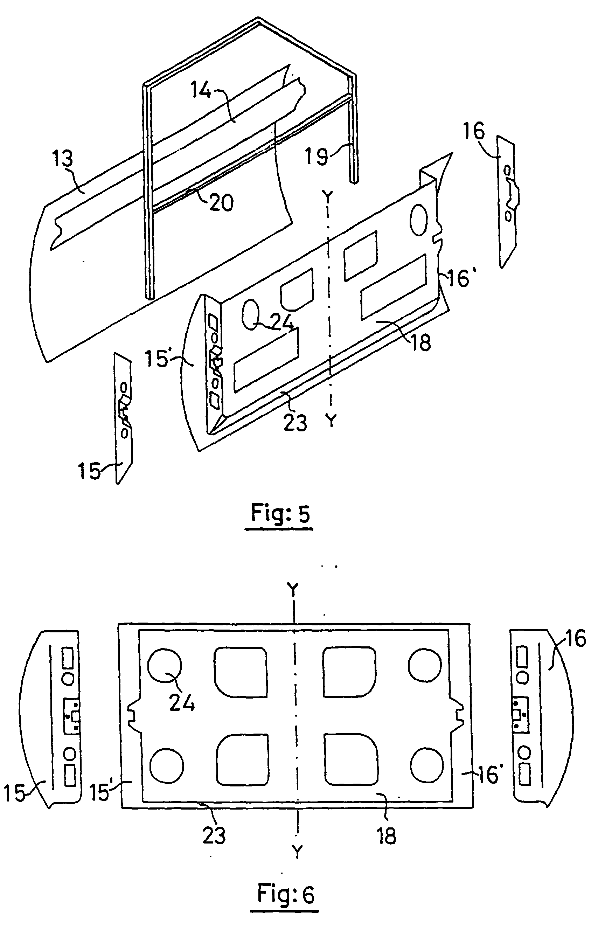

According to Figure 5, we can appreciate the variant that consists of the placing of the holding bar (20) in the structure of the door frame (13), on which the upper weather seals for the window are fixed, instead of using the upper part of the casing for this purpose.

This basic characteristic of the invention can be appreciated more clearly in Figure 6, where it is possible to observe the internal panel with the different items (24) to be arranged on it, the ends (15', 16') and the reinforcements (15,16) for the areas of the hinges and the locks.

In this Figure 6, like in the previous Figures, at least partially, the internal panel (18) of the door casing has some upper and lower reinforcing areas (23), whose added use will be described later.

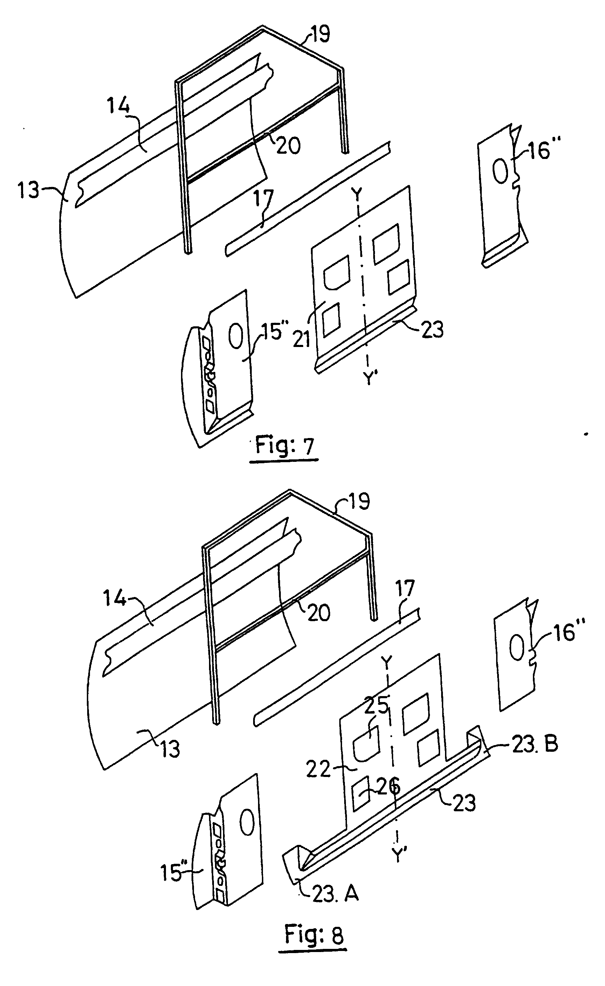

In accordance with Figure 7, we emphasise the simplest variant for the door, consisting of situating a more elementary central part (21) than in the previous cases, and connecting the end parts (15'', 16'') to it in order to receive the hinges and lock and, later, the reinforcements, which are not shown here.

In this case, the panel (21) is provided with a lower horizontal reinforcement (23) which could be eliminated if so required, thus making the unit even simpler.

Another variant, shown in Figure 8, has a lower reinforcement (23) of the panel that extends towards the sides of the said panel in the form of prolongations (23A, 23B), capable of later receiving the end parts (15'', 16'').

Obviously, other types and shapes of variations are possible within the context of the invention, while conserving its basic characteristic.

The different items used in the door can be joined together by welding, rivets, bolts, screws, adhesives or any other means of system of connection available.

The door configuration, exactly as it has been described, can be used in frameless doors, in which all the parts are applicable for both sides.

## Claims

1. Simplified door far automobiles, with a door casing (8,18) and with the corresponding sealing and reinforcing items, which is characterised in that it is farmed starting from an external panel (1, 13) and an internal panel of the door casing (8, 18), between which a frame (9, 19) is situated, in that the internal panel of the door casing (8, 18) is made symmetrically in relotion to a symmetry axis, with the majority of the parts that are incorporate into the door being assembled on its sides, where on the right hand side or on the left hand side, with the internal panel (8, 18) usually being an part with an elongated shape and provided at its longitudinal ends with a set of prolongations with specific shapes (4', 4'', 15', 15'', 15''') and (5, 5'', 16', 16'', 16''') in order to receive the hinges and lock of the door, respectively, as well as another two supplementary parts, a hinge reinforcement (4, 15) and a lock reinforcement (5, 16) that close off these ends, all of which are symmetrical in relation to the previously mentioned symmetry axis.

2. Simplified door for automobiles, in accordance with claim 1, characterised in that the symmetry axis is the horizontal XX axis and all the items or parts above or below this axis are arranged symmetrically in relation to it.

3. Simplified door for automobiles, in accordance with claim 1, characterised in that the symmetry axis is the vertical YY axis and all the items or parts are positioned symmetrically to the right or to the left in relation to it.

4. Simplified door for automobiles, in accordance with claims 1, 2 and 3, characterised in that the internal panel of the door (8, 18) is made up of a central portion, whose longitudinal ends (4', 15', 16') for the areas of the hinges and lock, respectively, form one single part.

5. Simplified door for automobiles, in accordance with claim 1, 2 and 3, characterised in that the internal panel of the door is made up of a flat central portion (11, 21), whose longitudinal ends have the support parts for the hinges (4'', 15'') and for the lock (5'', 16'') connected to them, with their auxiliary reinforcing parts (4, 15) and (5, 16), respectively.

6. Simplified door for automobiles, in accordance with claim 1 and 3, characterised in that the panel of the door casing (21, 22) is a flat part provided with a lower edge (23), which also extends to the hinge support (15'') and lock support (16'') parts.

7. Simplified door for automobiles, in accordance with claim 6, characterised in that the lower edge (23) of the panel of the door casing (22) extends out from both sides of this panel in prolongations (23A, 23B), to which the hinge supports (15''') and the lock support (16'''), that do not have this lower edge, are connected.

8. Simplified door for automobiles, in accordance with claim 1, 3 and 7, characterised in that the structure of the door frame (19) includes a holding or support bar (20) for the upper weather seals for the window.

9. Simplified door for automobiles, in accordance with claim 1, 2 and 3, characterised in that this general configuration is capable of being used in frameless doors, in which all the incorporated parts are applicable for both right hand and left hand use.

10. Simplified door for automobiles, in accordance with claim 1, 2 and 3, characterised in that the different items incorporated can be made of different materials and have different thicknesses.

11. Simplified door for automobiles, in accordance with claim 1, 2 and 3, characterised in that the different items in the door can be joined together by any kind of connection system.
